(19) Europäisches Patentamt
European Patent Office
Office européen des brevets

(11) **EP 2 787 654 B1**

(12) **EUROPEAN PATENT SPECIFICATION**

(45) Date of publication and mention
of the grant of the patent:
**27.04.2016 Bulletin 2016/17**

(21) Application number: **11878718.3**

(22) Date of filing: **31.12.2011**

(51) Int Cl.:
*H04B 7/015* (2006.01)          *H04L 27/26* (2006.01)
*H04B 3/23* (2006.01)          *H04B 3/20* (2006.01)
*H04L 25/02* (2006.01)

(86) International application number:
**PCT/CN2011/085202**

(87) International publication number:
**WO 2013/097247 (04.07.2013 Gazette 2013/27)**

(54) **TRANSMISSION METHOD, DEVICE AND SYSTEM USING CARRIER MODULATION**

ÜBERTRAGUNGSVERFAHREN, -VORRICHTUNG UND -SYSTEM MIT TRÄGERMODULATION

PROCÉDÉ, DISPOSITIF ET SYSTÈME DE TRANSMISSION UTILISANT UNE MODULATION DE PORTEUSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.10.2014 Bulletin 2014/41**

(73) Proprietor: **Huawei Technologies Co., Ltd.
Longgang District
Shenzhen, Guangdong 518129 (CN)**

(72) Inventor: **SHI, Cao
Shenzhen
Guangdong 518129 (CN)**

(74) Representative: **Goddar, Heinz J.
Boehmert & Boehmert
Anwaltspartnerschaft mbB
Patentanwälte Rechtsanwälte
Pettenkoferstrasse 20-22
80336 München (DE)**

(56) References cited:
**WO-A1-95/17046          WO-A1-99/53664
WO-A1-2010/037957          WO-A2-01/93448
CN-A- 1 602 594          CN-A- 101 312 372
CN-A- 101 447 965          US-A- 5 317 596**

**Description**

**TECHNICAL FIELD**

The present invention relates to the communications field, and in particular, to a transmission method, apparatus and system that use carrier modulation.

**BACKGROUND**

OFDM (Orthogonal Frequency Division Multiplexing) is an orthogonal frequency division multiplexing technology. In fact, the OFDM is one type of MCM (multi-carrier modulation). Its main idea is to divide a channel into several orthogonal subchannels, convert a high-speed data signal into parallel low-speed data subflows, and modulate them onto the subchannels for transmission. Orthogonal signals may be separated at a receiver end by using a related technology, thereby reducing mutual ISI (inter-symbol interference) between the subchannels. Other features such as high bandwidth usage and simple implementation enable the OFDM to be more widely applied in the field of radio communications. For example, a WLAN (wireless local area network) system, a WiMAX system based on orthogonal frequency division multiple access, and a fourth-generation mobile telecommunications system (4G) are all systems based on the OFDM technology.

An OSD (Overlapped Spectrum Duplex, overlapped spectrum duplex) technology refers to a technology in which a spectrum overlapping technology is used in both an uplink and a downlink to send and receive a signal. The OSD technology enables uplink and downlink signals to multiplex all bands completely at the same time, which is expected to double spectrum efficiency compared with a traditional FDD (frequency division duplex) or TDD (time division duplex) mode. However, as a transmission distance becomes shorter, a channel delay becomes smaller, and a sent signal and a received signal of a near-end device and a far-end device are almost completely orthogonal to each other in terms of time. Therefore, an echo (Echo) signal of the sent signal that has passed through a hybrid transformation coil (hybrid) and returned to a local receiver almost completely overlaps the received signal sent by the far-end device, causing severe interference to the received signal. As a result, spectrum duplex transmission using the orthogonal frequency division multiplexing technology cannot be implemented.

WO2010/037957A1 discloses a transmission method and a transmission device which adapt the transmission power mask in order to take into account the echo power estimated from an echo function.

WO99/53664A1 discloses a method of mapping information onto at least two simultaneous carries having different frequencies in a multi-carrier modulation system.

**SUMMARY**

Embodiments of the present invention provide a transmission method, apparatus and system that use carrier modulation, so as to implement spectrum duplex transmission for a signal transmitted by using an orthogonal frequency division multiplexing technology and increase spectrum usage.

To achieve the forgoing objective, the embodiments of the present invention adopt the following technical solutions:

A transmission method that uses carrier modulation, including:

performing, by a near end, sending of a near-end orthogonal frequency division multiplexing signal and receiving of a far-end orthogonal frequency division multiplexing signal simultaneously on an orthogonal frequency division multiplexing subcarrier channel;

obtaining system parameters of a received signal according to a near-end echo orthogonal frequency division multiplexing signal generated from the sent near-end orthogonal frequency division multiplexing signal and according to the received far-end orthogonal frequency division multiplexing signal, where the received signal is an overlapped signal of the near-end echo orthogonal frequency division multiplexing signal and the far-end orthogonal frequency division multiplexing signal;

generating an echo cancellation signal according to the system parameters of the near-end echo orthogonal frequency division multiplexing signal and the far-end orthogonal frequency division multiplexing signal and according to a near-end signal to be sent, where the near-end signal to be sent is a signal existent before the near-end orthogonal frequency division multiplexing signal undergoes orthogonal frequency division multiplexing modulation; and

overlapping the echo cancellation signal and the received signal to cancel the near-end echo orthogonal frequency division multiplexing signal that is overlapped in the received signal;

wherein the obtaining system parameters of a received signal comprises: obtaining a carrier phase difference between the near-end echo orthogonal frequency division multiplexing signal and the far-end orthogonal frequency division multiplexing signal, and a channel transfer function of a near-end echo channel.

A transmission apparatus that uses carrier modulation, including:

a sending unit, configured to send a near-end orthogonal frequency division multiplexing signal on at least one orthogonal frequency division multiplexing subcarrier channel;

a receiving unit, configured to receive a far-end orthogonal frequency division multiplexing signal on at least one orthogonal frequency division multiplexing subcarrier channel;

an obtaining unit, configured to obtain system parameters of a received signal according to a near-end echo orthogonal frequency division multiplexing signal generated from the sent near-end orthogonal frequency division multiplexing signal and according to the received far-end orthogonal frequency division multiplexing signal, where the received signal is an overlapped signal of the near-end echo orthogonal frequency division multiplexing signal and the far-end orthogonal frequency division multiplexing signal;

an echo cancellation signal generating unit, configured to generate an echo cancellation signal according to the system parameters of the near-end echo orthogonal frequency division multiplexing signal and the far-end orthogonal frequency division multiplexing signal and according to a near-end signal to be sent, where the near-end signal to be sent is a signal existent before the near-end orthogonal frequency division multiplexing signal undergoes orthogonal frequency division multiplexing modulation; and

a cancelling unit, configured to overlap the echo cancellation signal and the received signal to cancel the near-end echo orthogonal frequency division multiplexing signal that is overlapped in the received signal;

wherein the obtaining unit is specifically configured to:

obtain a carrier phase difference between the near-end echo orthogonal frequency division multiplexing signal and the far-end orthogonal frequency division multiplexing signal, and a channel transfer function of a near-end echo channel according to the near-end echo orthogonal frequency division multiplexing signal generated from the sent near-end orthogonal frequency division multiplexing signal and according to the received far-end orthogonal frequency division multiplexing signal.

A transmission system that uses carrier modulation, including a near-end apparatus and a far-end apparatus, where:

the near-end apparatus includes a sending unit, a receiving unit, an echo cancellation signal generating unit, and a cancelling unit, where:

the sending unit is configured to send a near-end orthogonal frequency division multiplexing signal on at least one orthogonal frequency division multiplexing subcarrier channel;

the receiving unit is configured to receive a far-end orthogonal frequency division multiplexing signal on at least one orthogonal frequency division multiplexing subcarrier channel;

the obtaining unit is configured to obtain system parameters of a received signal according to a near-end echo orthogonal frequency division multiplexing signal generated from the sent near-end orthogonal frequency division multiplexing signal and according to the received far-end orthogonal frequency division multiplexing signal, where the received signal is an overlapped signal of the near-end echo orthogonal frequency division multiplexing signal and the far-end orthogonal frequency division multiplexing signal;

the echo cancellation signal generating unit is configured to generate an echo cancellation signal according to the system parameters of the near-end echo orthogonal frequency division multiplexing signal and the far-end orthogonal frequency division multiplexing signal and according to a near-end signal to be sent, where the near-end signal to be sent is a signal existent before the near-end orthogonal frequency division multiplexing signal undergoes orthogonal frequency division multiplexing modulation; and

the cancelling unit is configured to overlap the echo cancellation signal and the received signal to cancel the near-end echo orthogonal frequency division multiplexing signal that is overlapped in the received signal; and

the far-end apparatus includes a sending unit, configured to send a far-end orthogonal frequency division multiplexing signal; and the far-end apparatus uses the sending unit to send the far-end orthogonal frequency division multiplexing signal to the near-end device; the near-end device uses the receiving unit to receive the far-end orthogonal frequency division multiplexing signal, and at the same time the near-end device uses its sending unit to send a near-end orthogonal frequency division multiplexing signal; after the near-end orthogonal frequency division multiplexing signal passes through a hybrid coil, a near-end echo orthogonal frequency division multiplexing signal is generated; the near-end device uses the obtaining unit to obtain the system parameters of the near-end echo orthogonal frequency division multiplexing signal and the far-end orthogonal frequency division multiplexing signal, a channel transfer function of a near-end echo channel, and a near-end signal to be sent, and generates an echo cancellation signal; the cancelling unit overlaps the echo cancellation signal and a received signal to cancel the near-end echo orthogonal frequency division multiplexing signal that is overlapped in the received signal.

According to the transmission method and apparatus provided in the embodiments of the present invention, phase inversion compensation is performed against a simulated echo signal after orthogonal frequency division multiplexing demodulation is performed for a received signal. In this way, an echo signal in an overlapped signal is canceled, and interference to the received signal caused by the echo signal is prevented, thereby implementing spectrum duplex transmission for a signal transmitted by using an orthogonal frequency division multiplexing technology and increasing spectrum usage.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a flowchart of a method according to an embodiment of the present invention;
FIG. 2 is a schematic structural diagram of an apparatus according to an embodiment of the present invention;
FIG. 3 is a schematic structural diagram of an obtaining unit according to an embodiment of the present invention;
FIG. 4 is a schematic structural diagram of an echo cancellation signal generating unit according to an embodiment of the present invention; and
FIG. 5 is a schematic structural diagram of a system according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

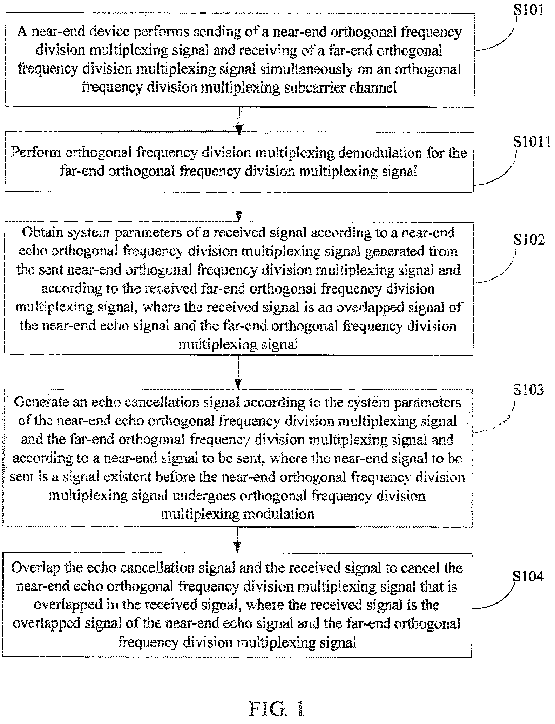

As shown in FIG. 1, a transmission method that uses carrier modulation according to an embodiment of the present invention includes the following steps:

S101. A near-end device performs sending of a near-end orthogonal frequency division multiplexing signal and receiving of a far-end orthogonal frequency division multiplexing signal simultaneously on an orthogonal frequency division multiplexing subcarrier channel.

An orthogonal frequency division multiplexing technology is to divide a channel into several orthogonal frequency division multiplexing subcarrier channels. At a near end, a near-end signal to be sent is converted into parallel low-speed data subflows, which are modulated onto the orthogonal frequency division multiplexing subcarrier channels to form near-end orthogonal frequency division multiplexing signals for transmission. At the same time, the near end receives far-end orthogonal frequency division multiplexing signals sent by a far end. The near-end orthogonal frequency division multiplexing signals, which are modulated by the near end onto the orthogonal frequency division multiplexing subcarrier channels for transmission, may be separated at the far end by using a related technology; similarly, the far-end orthogonal frequency division multiplexing signals, which are modulated by the far end onto orthogonal frequency division multiplexing subcarrier channels for transmission, may be separated at the near end by using a related technology. This may reduce mutual interference between the orthogonal frequency division multiplexing subcarrier channels. In this embodiment of the present invention, overlapped spectrum duplex transmission is combined with the orthogonal frequency division multiplexing technology, and the orthogonal frequency division multiplexing signals are sent and received on at least one orthogonal frequency division multiplexing subcarrier.

The receiving of the far-end orthogonal frequency division multiplexing signal further includes step S1011.

S1011. Perform orthogonal frequency division multiplexing demodulation for the far-end orthogonal frequency division multiplexing signal.

When the near end sends the near-end orthogonal frequency division multiplexing signal, after the near-end orthogonal frequency division multiplexing signal passes through a hybrid coil, a near-end echo orthogonal frequency division multiplexing signal is formed and overlaps the far-end orthogonal frequency division signal to form an overlapped orthogonal frequency division multiplexing signal. Therefore, when the near end performs orthogonal frequency division multiplexing demodulation for the received far-end orthogonal frequency division multiplexing signal, the orthogonal frequency division multiplexing demodulation is performed for the near-end echo orthogonal frequency division multiplexing signal and the far-end orthogonal frequency division multiplexing signal simultaneously to form an overlapped signal. Specifically, the near end performs orthogonal frequency division multiplexing demodulation for the received far-end orthogonal frequency division multiplexing signal, that is, performs orthogonal frequency division multiplexing demodulation for the overlapped orthogonal frequency division multiplexing signal.

In this embodiment of the present invention, the received overlapped orthogonal frequency division multiplexing signal is denoted by $z_3(t)$,

$$z_3(t) = j * z_1(t) + z_2(t)$$

After the orthogonal frequency division multiplexing demodulation is performed for the received signal, a real part $z_1(t)$ of the received signal is:

$$z_1(t) = \frac{1}{2}R\_CO(t)H_{echo}(\omega_0)[-\sin(\theta_0)] + \frac{1}{2}I\_CO(t)H_{echo}(\omega_0)\cos(\theta_0) + \frac{1}{2}I\_CPE(t)H(\omega_0)$$

an imaginary part $z_2(t)$ of the overlapped orthogonal frequency division multiplexing signal is:

$$z_2(t) = \frac{1}{2}R\_CO(t)H_{echo}(\omega_0)[\cos(\theta_0)] - \frac{1}{2}I\_CO(t)H_{echo}(\omega_0)\sin(\theta_0) + \frac{1}{2}R\_CPE(t)H(\omega_0)$$

In the forgoing formulas, $R\_CO(t)$ and $I\_CO(t)$ respectively denote a real part and an imaginary part of a near-end signal to be sent after the signal undergoes inverse fast Fourier transformation IFFT, $H_{echo}(\omega_0)$ is a transfer function of a near-end echo channel, $R\_CPE(t)$ and $I\_CPE(t)$ are respectively a real part and an imaginary part of a far-end signal to be sent after the signal undergoes inverse fast Fourier transformation IFFT, and $H(\omega_0)$ denotes a transfer function of a far-end echo channel.

Therefore:

$$z_3(t) = j * z_1(t) + z_2(t)$$

$$= j * \frac{1}{2}R\_CO(t)H_{echo}(\omega_0)[-\sin(\theta_0)] + \frac{1}{2}I\_CO(t)H_{echo}(\omega_0)\cos(\theta_0) + \frac{1}{2}I\_CPE(t)H(\omega_0)$$

$$\left\{ \frac{1}{2}R\_CO(t)H_{echo}(\omega_0)[\cos(\theta_0)] - \frac{1}{2}I\_CO(t)H_{echo}(\omega_0)\sin(\theta_0) + \frac{1}{2}R\_CPE(t)H(\omega_0) \right\}$$

$$= -\frac{1}{2}\sin(\theta_0)H_{echo}(\omega_0)[j * R\_CO(t) + I\_CO(t)]$$

$$+ \frac{1}{2}\cos(\theta_0)H_{echo}(\omega_0)[R\_CO(t) + j * I\_CO(t)]$$

$$+ \frac{1}{2}H(\omega_0)[R\_CPE(t) + j * I\_CPE(t)]$$

After fast Fourier transformation FFT is performed on both sides of the equation, the equation becomes:

$$fft(z_3(t)) = -\frac{1}{2}\sin(\theta_0)H_{echo}(\omega_0)fft[j*R\_CO(t) + I\_CO(t)]$$

$$+\frac{1}{2}\cos(\theta_0)H_{echo}(\omega_0)fft[R\_CO(t) + j*I\_CO(t)]$$

$$+\frac{1}{2}H(\omega_0)fft[R\_CPE(t) + j*I\_CPE(t)]$$

$$=\frac{1}{2}\sin(\theta_0)H_{echo}(\omega_0)IFFT\_Input\_CO(-f)*j$$

$$+\frac{1}{2}\cos(\theta_0)H_{echo}(\omega_0)IFFT\_Input\_CO(f)$$

$$+\frac{1}{2}H(\omega_0)IFFT\_Input\_CPE(f)$$

where, *Input_CO(f)* denotes the near-end signal to be sent. Therefore, the signal sent from the far end is:

$$\frac{1}{2}H(\omega_0)IFFT\_Input\_CPE(f) = fft(z_3(t)) - \frac{1}{2}\sin(\theta_0)H_{echo}(\omega_0)IFFT\_Input\_CO(-f)*j$$

$$-\frac{1}{2}\cos(\theta_0)H_{echo}(\omega_0)IFFT\_Input\_CO(f)$$

S102: Obtain system parameters of a received signal according to a near-end echo orthogonal frequency division multiplexing signal generated from the sent near-end orthogonal frequency division multiplexing signal and according to the received far-end orthogonal frequency division multiplexing signal, where the received signal is an overlapped signal of the near-end echo orthogonal frequency division multiplexing signal and the far-end orthogonal frequency division multiplexing signal.

The near-end echo orthogonal frequency division multiplexing signal is a signal that passes through a near-end hybrid coil and returns to the near end when the near-end orthogonal frequency division multiplexing signal is transmitted to the far end; the far-end orthogonal frequency division multiplexing signal is a signal that is sent from the far end, undergoes orthogonal frequency division multiplexing modulation, and is transmitted to the near end.

In this embodiment of the present invention, the obtaining of the system parameters of the received signal primarily includes two scenarios: Scenario 1: Obtain a carrier phase difference between the near-end echo orthogonal frequency division multiplexing signal and the far-end orthogonal frequency division multiplexing signal, and a channel transfer function of a near-end echo channel.

In a signal transmission process, for reasons such as a latency, a carrier phase difference is inevitably generated between the far-end orthogonal frequency division multiplexing signal transmitted from the far end and the near-end echo orthogonal frequency division multiplexing signal, where the carrier phase difference is denoted by $\theta_0$. The near-end echo orthogonal frequency division multiplexing signal is not completely synchronous to the far-end orthogonal frequency division multiplexing signal. However, when orthogonal frequency division multiplexing demodulation is performed for a received signal, the orthogonal frequency division multiplexing demodulation is still performed according to a phase of the sending-end orthogonal frequency division multiplexing signal. Therefore, when echo cancellation is performed, synchronous adjustment needs to be performed for an echo cancellation signal, so that the echo cancellation signal is synchronous with the near-end echo orthogonal frequency division multiplexing signal after the orthogonal frequency division multiplexing demodulation.

The obtaining of the transfer function of the near-end echo channel and the carrier phase difference between the near-end echo orthogonal frequency division multiplexing signal and the far-end orthogonal frequency division multiplexing signal is specifically: performing channel estimation for the received far-end orthogonal frequency division multiplexing signal and near-end echo orthogonal frequency division multiplexing signal by using a channel estimation method, so as to obtain the transfer function of the near-end echo channel and the carrier phase difference between the near-end echo orthogonal frequency division multiplexing signal and the far-end orthogonal frequency division multiplexing signal. The channel estimation method refers to a process of estimating a parameter in a channel from received data by assuming a model of the channel to be estimated.

In the process of obtaining the carrier phase difference, two obtaining manners are further available according to a difference in a way of obtaining the carrier phase difference:

First manner: Detect a signal generated by mixing the near-end echo orthogonal frequency division multiplexing signal and the far-end orthogonal frequency division multiplexing signal, and use the channel estimation method to obtain the transfer function of the near-end echo channel and the carrier phase difference between the near-end echo orthogonal frequency division multiplexing signal and the far-end orthogonal frequency division multiplexing signal.

Second manner: Detect the near-end echo orthogonal frequency division multiplexing signal and obtain the transfer function of the near-end echo channel and a phase of the near-end echo orthogonal frequency division multiplexing signal, and detect the far-end orthogonal frequency division multiplexing signal and obtain a phase of the far-end orthogonal frequency division multiplexing signal, separately; and calculate the carrier phase difference between the near-end echo orthogonal frequency division multiplexing signal and the far-end orthogonal frequency division multiplexing signal.

A specific method of the second manner is: On one hand, channel estimation is performed for the near-end echo orthogonal frequency division multiplexing signal by using the channel estimation method, so as to obtain the phase of the near-end echo orthogonal frequency division multiplexing signal or parameters related to the phase, and the transfer function of the near-end echo channel, which is denoted by $H_{echo}(\omega_0)$. On the other hand, estimation is performed for the far-end orthogonal frequency division multiplexing signal by using the channel estimation method, so as to obtain the phase of the far-end orthogonal frequency division multiplexing signal or parameters related to the phase. The transfer function of the near-end echo channel and the carrier phase difference between the near-end echo orthogonal frequency division multiplexing signal and the far-end orthogonal frequency division multiplexing signal are obtained by means of calculation.

Scenario 2: Obtain a product of the channel transfer function of the near-end echo channel and a sine value of the carrier phase difference between the near-end echo orthogonal frequency division multiplexing signal and the far-end orthogonal frequency division multiplexing signal, and a product of the channel transfer function of the near-end echo channel and a cosine value of the carrier phase difference between the near-end echo orthogonal frequency division multiplexing signal and the far-end orthogonal frequency division multiplexing signal.

Specifically, the channel estimation method is used to obtain the product of the transfer function of the near-end echo channel and the sine value of the carrier phase difference between the near-end echo orthogonal frequency division multiplexing signal and the far-end orthogonal frequency division multiplexing signal, and the product of the channel transfer function of the near-end echo channel and the cosine value of the carrier phase difference between the near-end echo orthogonal frequency division multiplexing signal and the far-end orthogonal frequency division multiplexing signal namely, $H_{echo}(\omega_0)sin(\theta_0)$ and $H_{echo}(\omega_0)cos(\theta_0)$

S103. Generate an echo cancellation signal according to the system parameters of the near-end echo orthogonal frequency division multiplexing signal and the far-end orthogonal frequency division multiplexing signal and according to a near-end signal to be sent, where the near-end signal to be sent is a signal existent before the near-end orthogonal frequency division multiplexing signal undergoes orthogonal frequency division multiplexing modulation.

When the carrier phase difference between the near-end echo orthogonal frequency division multiplexing signal and the far-end orthogonal frequency division multiplexing signal as well as the channel transfer function of the near-end echo channel are obtained, adaptive filtering is performed for the near-end signal to be sent according to the carrier phase difference between the near-end echo orthogonal frequency division multiplexing signal and the far-end orthogonal frequency division multiplexing signal and according to the channel transfer function of the near-end echo channel, so as to generate an echo cancellation signal.

An adaptive filtering processing method is applied to a near-end wave to be sent, and the echo cancellation signal is formed by simulating a signal generated after the echo orthogonal frequency division multiplexing signal is demodulated, and is used for performing phase inversion overlapping for the echo signal that has undergone the orthogonal frequency division multiplexing demodulation and canceling the echo signal. The adaptive filtering processing method is a processing method that adjusts a filter coefficient automatically based on estimation of statistic features of input and output signals and by using a specific algorithm, so as to achieve a best filtering feature.

In addition, when the product of the channel transfer function of the near-end echo channel and the sine value of the carrier phase difference between the near-end echo orthogonal frequency division multiplexing signal and the far-end orthogonal frequency division multiplexing signal and the product of the channel transfer function of the near-end echo channel and the cosine value of the carrier phase difference between the near-end echo orthogonal frequency division multiplexing signal and the far-end orthogonal frequency division multiplexing signal are obtained, adaptive filtering processing is performed for the near-end signal to be sent according to the product of the channel transfer function of the near-end echo channel and the sine value of the carrier phase difference between the near-end echo orthogonal frequency division multiplexing signal and the far-end orthogonal frequency division multiplexing signal and the product of the channel transfer function of the near-end echo channel and the cosine value of the carrier phase difference between the near-end echo orthogonal frequency division multiplexing signal and the far-end orthogonal frequency division multiplexing signal, so as to generate the echo cancellation signal.

The echo cancellation signal is formed by simulating a signal generated after the echo orthogonal frequency division multiplexing signal is demodulated according to the product of the channel transfer function $H_{echo}(\omega_0)$ of the near-end echo channel and the sine value of the carrier phase difference between the near-end echo orthogonal frequency division multiplexing signal and the far-end orthogonal frequency division multiplexing signal and the product of the channel transfer function of the near-end echo channel and the cosine value of the carrier phase difference between the near-end echo orthogonal frequency division multiplexing signal and the far-end orthogonal frequency division multiplexing signal, namely, $H_{echo}(\omega_0)\sin(\theta_0)$ and $H_{echo}(\omega_0)\cos(\theta_0)$, where the echo cancellation signal is used for performing phase inversion compensation for the echo signal that has undergone the orthogonal frequency division multiplexing demodulation and canceling the echo signal.

S104. Overlap the echo cancellation signal and the received signal to cancel the near-end echo orthogonal frequency division multiplexing signal that is overlapped in the received signal, where the received signal is the overlapped signal of the near-end echo orthogonal frequency division multiplexing signal and the far-end orthogonal frequency division multiplexing signal.

The received signal includes the near-end echo orthogonal frequency division multiplexing signal and the far-end orthogonal frequency division multiplexing signal, and the echo signal is eliminated by using a principle that the echo cancellation signal and the echo signal are overlapped to achieve cancelation.

According to the orthogonal frequency division multiplexing duplex transmission method provided in this embodiment of the present invention, phase inversion compensation is performed against the simulated echo cancellation signal after orthogonal frequency division multiplexing demodulation is performed for the received signal. In this way, the echo in the received signal is canceled, and interference to the received signal caused by the echo is prevented, thereby implementing spectrum duplex transmission for a signal transmitted by using an orthogonal frequency division multiplexing technology and increasing spectrum usage.

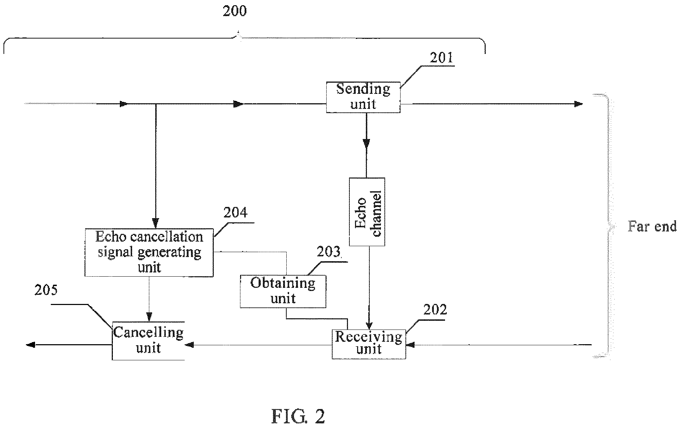

As shown in FIG. 2, a transmission apparatus 200 that uses carrier modulation according to an embodiment of the present invention includes a sending unit 201, a receiving unit 202, an obtaining unit 203, an echo cancellation signal generating unit 204, and a cancelling unit 205.

The sending unit 201 is configured to send a near-end orthogonal frequency division multiplexing signal on at least one orthogonal frequency division multiplexing subcarrier channel.

The receiving unit 202 is configured to receive a far-end orthogonal frequency division multiplexing signal on at least one orthogonal frequency division multiplexing subcarrier channel.

The obtaining unit 203 is configured to obtain system parameters of a received signal according to a near-end echo orthogonal frequency division multiplexing signal generated from the sent near-end orthogonal frequency division multiplexing signal and according to the received far-end orthogonal frequency division multiplexing signal, where the received signal is an overlapped signal of the near-end echo orthogonal frequency division multiplexing signal and the far-end orthogonal frequency division multiplexing signal.

The echo cancellation signal generating unit 204 is configured to generate an echo cancellation signal according to the system parameters of the near-end echo orthogonal frequency division multiplexing signal and the far-end orthogonal frequency division multiplexing signal and according to a near-end signal to be sent, where the near-end signal to be sent is a signal existent before the near-end orthogonal frequency division multiplexing signal undergoes orthogonal frequency division multiplexing modulation. The cancelling unit 205 is configured to overlap the echo cancellation signal and the received signal to cancel the near-end echo orthogonal frequency division multiplexing signal that is overlapped in the received signal, where the received signal is the overlapped signal of the near-end echo orthogonal frequency division multiplexing signal and the far-end orthogonal frequency division multiplexing signal.

The receiving unit 202 is further configured to perform orthogonal frequency division multiplexing demodulation for the far-end orthogonal frequency division multiplexing signal.

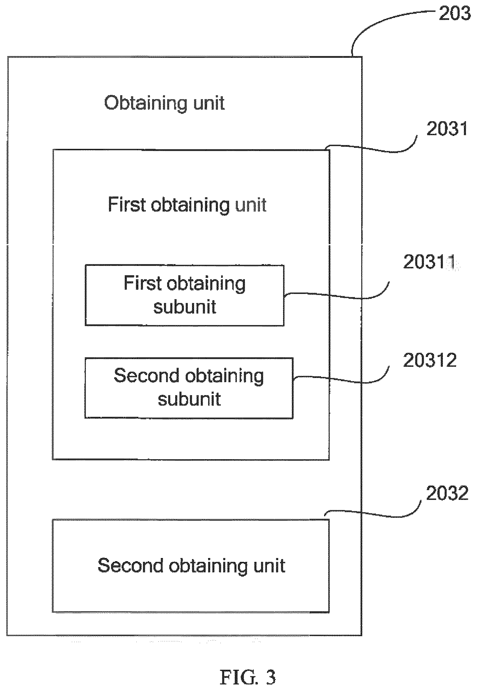

As shown in FIG. 3, the obtaining unit 203 includes a first obtaining unit 2031 and a second obtaining unit 2032.

The first obtaining unit 2031 is specifically configured to obtain a carrier phase difference between the near-end echo orthogonal frequency division multiplexing signal and the far-end orthogonal frequency division multiplexing signal, and a channel transfer function of a near-end echo channel according to the near-end echo orthogonal frequency division multiplexing signal generated from the sent near-end orthogonal frequency division multiplexing signal and according to the received far-end orthogonal frequency division multiplexing signal.

The second obtaining unit 2032 is specifically configured to obtain a product of the channel transfer function of the near-end echo channel and a sine value of the carrier phase difference between the near-end echo orthogonal frequency division multiplexing signal and the far-end orthogonal frequency division multiplexing signal, and a product of the channel transfer function of the near-end echo channel and a cosine value of the carrier phase difference between the near-end echo orthogonal frequency division multiplexing signal and the far-end orthogonal frequency division multiplexing signal.

Optionally, the first obtaining unit 2031 further includes a first obtaining subunit 20311 and a second obtaining subunit 20312.

The first obtaining subunit 20311 is configured to detect the near-end echo orthogonal frequency division multiplexing signal that has passed through a hybrid coil and obtain the transfer function of the near-end echo channel and a phase of the near-end echo orthogonal frequency division multiplexing signal.

The second obtaining subunit 20312 is configured to detect the far-end orthogonal frequency division multiplexing signal and obtain a phase of the far-end orthogonal frequency division multiplexing signal.

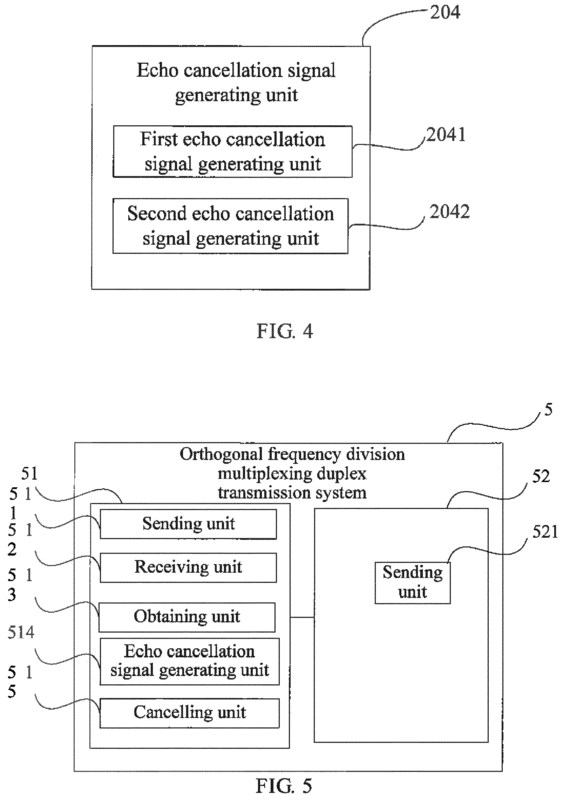

In addition, as shown in FIG. 4, the echo cancellation signal generating unit 204 includes:

a first echo cancellation signal generating unit 2041 and a second echo cancellation signal generating unit 2042.

The first echo cancellation signal generating unit 2041 is configured to perform adaptive filtering processing for the near-end signal to be sent according to the carrier phase difference between the near-end echo orthogonal frequency division multiplexing signal and the far-end orthogonal frequency division multiplexing signal and according to the channel transfer function of the near-end echo channel, so as to generate the echo cancellation signal.

The second echo cancellation signal generating unit 2042 is configured to perform adaptive filtering processing for the near-end signal to be sent according to the product of the channel transfer function of the near-end echo channel and the sine value of the carrier phase difference between the near-end echo orthogonal frequency division multiplexing signal and the far-end orthogonal frequency division multiplexing signal, and the product of the channel transfer function of the near-end echo channel and the cosine value of the carrier phase difference between the near-end echo orthogonal frequency division multiplexing signal and the far-end orthogonal frequency division multiplexing signal, so as to generate the echo cancellation signal.

According to the orthogonal frequency division multiplexing duplex transmission apparatus provided in this embodiment of the present invention, phase inversion compensation is performed against the simulated echo signal after orthogonal frequency division multiplexing demodulation is performed for the received signal. In this way, the echo signal in the overlapped signal is canceled, and interference to the received signal caused by the echo signal is prevented, thereby implementing spectrum duplex transmission for a signal transmitted by using an orthogonal frequency division multiplexing technology and increasing spectrum usage. Further, as shown in FIG. 5, a transmission system 5 that uses carrier modulation according to an embodiment of the present invention includes a near-end apparatus 51 and a far-end apparatus 52.

The near-end apparatus 51 includes a sending unit 511, a receiving unit 512, an obtaining unit 513, an echo cancellation signal generating unit 514, and a cancelling unit 515.

The sending unit 511 is configured to send a near-end orthogonal frequency division multiplexing signal on an orthogonal frequency division multiplexing subcarrier channel.

The receiving unit 512 is configured to receive a far-end orthogonal frequency division multiplexing signal on an orthogonal frequency division multiplexing subcarrier channel.

The obtaining unit 513 is configured to obtain system parameters of a received signal according to an echo orthogonal frequency division multiplexing signal generated from the sent near-end orthogonal frequency division multiplexing signal and according to the received far-end orthogonal frequency division multiplexing signal.

The echo cancellation signal generating unit 514 is configured to process at least two orthogonal frequency division multiplexing subcarrier signals among the near-end orthogonal frequency division multiplexing signal according to the obtained the system parameters of the received signal to generate an echo cancellation signal of the orthogonal frequency division multiplexing subcarriers signal after the processing, where the echo cancellation signal is used to perform cancellation for the received carrier signal.

The cancelling unit 515 is configured to overlap the echo cancellation signal and the received signal to cancel the near-end echo orthogonal frequency division multiplexing signal that is overlapped in the received signal.

The far-end apparatus 52 includes a sending unit 521, configured to send a far-end orthogonal frequency division multiplexing signal.

The far-end apparatus 52 uses the sending unit 521 to send the far-end orthogonal frequency division multiplexing signal to the near-end device, and the near-end device uses the receiving unit 512 to receive the far-end orthogonal frequency division multiplexing signal. At the same time, the near-end device uses the sending unit 511 to send a near-end orthogonal frequency division multiplexing signal. After the near-end orthogonal frequency division multiplexing signal passes through a hybrid coil, a near-end echo orthogonal frequency division multiplexing signal is generated. The near-end device uses the obtaining unit 513 to obtain the system parameters of the received signal. The echo cancellation signal generating unit 514 generates an echo cancellation signal according to the system parameters of the received signal and according to a near-end signal to be sent. The cancelling unit 515 overlaps the echo cancellation signal and the received signal to cancel the echo orthogonal frequency division multiplexing signal that is overlapped in the received signal.

Further, the near-end apparatus 51 is the transmission apparatus 200 in FIG. 2 and can perform processing according to a procedure recorded in FIG. 1.

In the transmission system provided in this embodiment of the present invention, phase inversion compensation is performed against a simulated echo signal after orthogonal frequency division multiplexing demodulation is performed for the received signal. In this way, the echo signal in the received signal is canceled, and interference to the received signal caused by the echo signal is prevented, thereby implementing spectrum duplex transmission for a signal transmitted by using an orthogonal frequency division multiplexing technology and increasing spectrum usage.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1.  A transmission method that uses carrier modulation, comprising:

    performing (S101), by a near end, sending of a near-end orthogonal frequency division multiplexing signal and receiving of a far-end orthogonal frequency division multiplexing signal simultaneously on an orthogonal frequency division multiplexing subcarrier channel;
    obtaining (S102) system parameters of a received signal according to a near-end echo orthogonal frequency division multiplexing signal generated from the sent near-end orthogonal frequency division multiplexing signal and according to the received far-end orthogonal frequency division multiplexing signal, wherein the received signal is an overlapped signal of the near-end echo orthogonal frequency division multiplexing signal and the far-end orthogonal frequency division multiplexing signal;
    generating (S103) an echo cancellation signal according to the system parameters of the received signal and according to a near-end signal to be sent, wherein the near-end signal to be sent is a signal existent before the near-end orthogonal frequency division multiplexing signal undergoes orthogonal frequency division multiplexing modulation; and
    overlapping (S104) the echo cancellation signal and the received signal to cancel the near-end echo orthogonal frequency division multiplexing signal that is overlapped in the received signal;

    wherein the obtaining (S102) system parameters of a received signal comprises: obtaining a carrier phase difference between the near-end echo orthogonal frequency division multiplexing signal and the far-end orthogonal frequency division multiplexing signal, and a channel transfer function of a near-end echo channel.

2.  The method according to claim 1, wherein the performing (S101) receiving of a far-end orthogonal frequency division multiplexing signal further comprises: performing (S101) orthogonal frequency division multiplexing demodulation for the far-end orthogonal frequency division multiplexing signal.

3.  The method according to claim 1, wherein the obtaining (S102) system parameters of a received signal further comprises:

    obtaining a product of a channel transfer function of a near-end echo channel and a sine value of the carrier phase difference between the near-end echo orthogonal frequency division multiplexing signal and the far-end orthogonal frequency division multiplexing signal, and a product of the channel transfer function of the near-end echo channel and a cosine value of the carrier phase difference between the near-end echo orthogonal frequency division multiplexing signal and the far-end orthogonal frequency division multiplexing signal.

4.  The method according to claim 1, wherein the obtaining a carrier phase difference between the near-end echo orthogonal frequency division multiplexing signal and the far-end orthogonal frequency division multiplexing signal comprises:

    detecting the near-end echo orthogonal frequency division multiplexing signal and the far-end orthogonal frequency division multiplexing signal that are received, and obtaining the transfer function of the near-end echo channel and the carrier phase difference between the near-end echo orthogonal frequency division multiplexing signal and the far-end orthogonal frequency division multiplexing signal.

**5.** The method according to claim 1, wherein the obtaining a carrier phase difference between the near-end echo orthogonal frequency division multiplexing signal and the far-end orthogonal frequency division multiplexing signal comprises:

detecting the near-end echo orthogonal frequency division multiplexing signal that has passed through a hybrid coil and obtaining the transfer function of the near-end echo channel and a phase of the near-end echo orthogonal frequency division multiplexing signal, and detecting the far-end orthogonal frequency division multiplexing signal and obtaining a phase of the far-end orthogonal frequency division multiplexing signal, separately.

**6.** The method according to claim 4, wherein before the generating of an echo cancellation signal according to the carrier phase difference between the near-end echo orthogonal frequency division multiplexing signal and the far-end orthogonal frequency division multiplexing signal, the channel transfer function of the near-end echo channel, and the near-end signal to be sent, the method further comprises:

calculating the carrier phase difference according to the obtained phase of the near-end echo orthogonal frequency division multiplexing signal and the obtained phase of the far-end orthogonal frequency division multiplexing signal.

**7.** The method according to claim 1, wherein after the obtaining a carrier phase difference between the near-end echo orthogonal frequency division multiplexing signal and the far-end orthogonal frequency division multiplexing signal, and a channel transfer function of a near-end echo channel, the method further comprises:

performing adaptive filtering processing for the near-end signal to be sent according to the carrier phase difference between the near-end echo orthogonal frequency division multiplexing signal and the far-end orthogonal frequency division multiplexing signal and according to the channel transfer function of the near-end echo channel, so as to generate the echo cancellation signal.

**8.** The method according to claim 3, wherein after the obtaining a product of the channel transfer function of the near-end echo channel and a sine value of the carrier phase difference between the near-end echo orthogonal frequency division multiplexing signal and the far-end orthogonal frequency division multiplexing signal, and a product of the channel transfer function of the near-end echo channel and a cosine value of the carrier phase difference between the near-end echo orthogonal frequency division multiplexing signal and the far-end orthogonal frequency division multiplexing signal, the method further comprises:

performing adaptive filtering processing for the near-end signal to be sent according to the product of the channel transfer function of the near-end echo channel and the sine value of the carrier phase difference between the near-end echo orthogonal frequency division multiplexing signal and the far-end orthogonal frequency division multiplexing signal, and the product of the channel transfer function of the near-end echo channel and the cosine value of the carrier phase difference between the near-end echo orthogonal frequency division multiplexing signal and the far-end orthogonal frequency division multiplexing signal, so as to generate the echo cancellation signal.

**9.** A transmission apparatus that uses carrier modulation, comprising:

a sending unit (201), configured to send a near-end orthogonal frequency division multiplexing signal on at least one orthogonal frequency division multiplexing subcarrier channel;
a receiving unit (202), configured to receive a far-end orthogonal frequency division multiplexing signal on at least one orthogonal frequency division multiplexing subcarrier channel;
an obtaining unit (203), configured to obtain system parameters of a received signal according to a near-end echo orthogonal frequency division multiplexing signal generated from the sent near-end orthogonal frequency division multiplexing signal and according to the received far-end orthogonal frequency division multiplexing signal,
wherein the received signal is an overlapped signal of the near-end echo orthogonal frequency division multiplexing signal and the far-end orthogonal frequency division multiplexing signal;
an echo cancellation signal generating unit (204), configured to generate an echo cancellation signal according to the system parameters of the received signal and according to a near-end signal to be sent, wherein the near-end signal to be sent is a signal existent before the near-end orthogonal frequency division multiplexing signal undergoes orthogonal frequency division multiplexing modulation; and

a cancelling unit (205), configured to overlap the echo cancellation signal and the received signal to cancel the near-end echo orthogonal frequency division multiplexing signal that is overlapped in the received signal;

wherein the obtaining unit (203) is specifically configured to:

obtain a carrier phase difference between the near-end echo orthogonal frequency division multiplexing signal and the far-end orthogonal frequency division multiplexing signal, and a channel transfer function of a near-end echo channel according to the near-end echo orthogonal frequency division multiplexing signal generated from the sent near-end orthogonal frequency division multiplexing signal and according to the received far-end orthogonal frequency division multiplexing signal.

10. The transmission apparatus according to claim 9, wherein the receiving unit (202) is further configured to perform orthogonal frequency division multiplexing demodulation for the far-end orthogonal frequency division multiplexing signal.

11. The transmission apparatus according to claim 9, wherein the obtaining unit (203) is further configured to:

obtain a product of a channel transfer function of a near-end echo channel and a sine value of the carrier phase difference between the near-end echo orthogonal frequency division multiplexing signal and the far-end orthogonal frequency division multiplexing signal, and a product of the channel transfer function of the near-end echo channel and a cosine value of the carrier phase difference between the near-end echo orthogonal frequency division multiplexing signal and the far-end orthogonal frequency division multiplexing signal.

12. The transmission apparatus according to claim 9, wherein the obtaining unit (203) further comprises:

a first obtaining subunit, configured to detect the near-end echo orthogonal frequency division multiplexing signal that has passed through a hybrid coil and obtain the transfer function of the near-end echo channel and a phase of the echo orthogonal frequency division multiplexing signal; and
a second obtaining subunit, configured to detect the far-end orthogonal frequency division multiplexing signal and obtain a phase of the far-end orthogonal frequency division multiplexing signal.

13. The transmission apparatus according to claim 12, wherein the echo cancellation signal generating unit (204) is further configured to calculate the carrier phase difference according to the obtained phase of the near-end echo orthogonal frequency division multiplexing signal and the obtained phase of the far-end orthogonal frequency division multiplexing signal.

14. The transmission apparatus according to claim 9, wherein the echo cancellation signal generating unit (204) is specifically configured to perform adaptive filtering processing for the near-end signal to be sent according to the carrier phase difference between the near-end echo orthogonal frequency division multiplexing signal and the far-end orthogonal frequency division multiplexing signal and according to the channel transfer function of the near-end echo channel, so as to generate the echo cancellation signal.

15. The transmission apparatus according to claim 11, wherein the echo cancellation signal generating unit (204) is further configured to perform adaptive filtering processing for the near-end signal to be sent according to the product of the channel transfer function of the near-end echo channel and the sine value of the carrier phase difference between the near-end echo orthogonal frequency division multiplexing signal and the far-end orthogonal frequency division multiplexing signal, and the product of the channel transfer function of the near-end echo channel and the cosine value of the carrier phase difference between the near-end echo orthogonal frequency division multiplexing signal and the far-end orthogonal frequency division multiplexing signal, so as to generate the echo cancellation signal.

16. A transmission system that uses carrier modulation, comprising a near-end apparatus and a far-end apparatus, wherein the near-end apparatus is the transmission apparatus of claim 9; and
the far-end apparatus comprises a sending unit, configured to send a far-end orthogonal frequency division multiplexing signal; and
the far-end apparatus uses the sending unit to send the far-end orthogonal frequency division multiplexing signal to the near-end device; the near-end device uses the receiving unit to receive the far-end orthogonal frequency division multiplexing signal, and at the same time the near-end device uses its sending unit to send a near-end orthogonal frequency division multiplexing signal; after the near-end orthogonal frequency division multiplexing signal passes through a hybrid coil, a near-end echo orthogonal frequency division multiplexing signal is generated; the near-end device uses the obtaining unit to obtain system parameters of the near-end echo orthogonal frequency division multiplexing signal and the far-end orthogonal frequency division multiplexing signal, a channel transfer function of a near-end echo channel, and a near-end signal to be sent, and generates an echo cancellation signal; the cancelling unit overlaps the echo cancellation signal and a received signal to cancel the near-end echo orthogonal frequency division multiplexing signal that is overlapped in the received signal.

**Patentansprüche**

1. Übertragungsverfahren, das Trägermodulation benutzt, umfassend:

   Durchführen (S101), durch eine Nahseite, des Sendens eines orthogonalen Frequenzmultiplexsignals der Nahseite und gleichzeitig Empfangen eines orthogonalen Frequenzmultiplexsignals der Gegenseite auf einem orthogonalen Frequenzmultiplex-Unterträgerkanal;
   Gewinnen (S102) von Systemparametern eines empfangenen Signals gemäß einem orthogonalen Echo-Frequenzmultiplexsignal der Nahseite, das aus dem orthogonalen Frequenzmultiplexsignal der Nahseite erzeugt wird, und gemäß dem empfangenen orthogonalen Frequenzmultiplexsignal der Gegenseite, wobei das empfangene Signal ein überlapptes Signal des orthogonalen Echo-Frequenzmultiplexsignals der Nahseite und des orthogonalen Frequenzmultiplexsignals der Gegenseite ist;
   Erzeugen (S103) eines Echounterdrückungssignals gemäß den Systemparametern des empfangenen Signals und gemäß einem zu sendenden Nahseitensignal, wobei das zu sendende Nahseitensignal ein Signal ist, das existiert, bevor das orthogonale Frequenzmultiplexsignal der Nahseite der orthogonalen Frequenzmultiplexmodulation unterzogen wird; und
   Überlappen (S104) des Echounterdrückungssignals und des empfangenen Signals, um das orthogonale Echo-Frequenzmultiplexsignal der Nahseite zu unterdrücken, das im empfangenen Signal überlappt wird;

   wobei das Gewinnen (S102) von Systemparametern aus einem empfangenen Signal umfasst: Gewinnen einer Trägerphasendifferenz zwischen dem orthogonalen Echo-Frequenzmultiplexsignal der Nahseite und dem orthogonalen Frequenzmultiplexsignal der Gegenseite und einer Kanaltransferfunktion eines Nahseiten-Echokanals.

2. Verfahren nach Anspruch 1, wobei das Durchführen (S101) des Empfangens eines orthogonalen Frequenzmultiplexsignals der Gegenseite ferner umfasst: Durchführen (S101) der orthogonalen Frequenzmultiplexdemodulation für das orthogonale Frequenzmultiplexsignal der Gegenseite.

3. Verfahren nach Anspruch 1, wobei das Gewinnen (S102) von Systemparametern eines empfangenen Signals ferner umfasst:

   Gewinnen eines Produkts aus einer Kanaltransferfunktion eines Nahseiten-Echokanals und einem Sinuswert der Trägerphasendifferenz zwischen dem orthogonalen Echo-Frequenzmultiplexsignal der Nahseite und dem orthogonalen Frequenzmultiplexsignal der Gegenseite und eines Produkts aus der Kanaltransferfunktion des Nahseiten-Echokanals und einem Kosinuswert der Trägerphasendifferenz zwischen dem orthogonalen Echo-Frequenzmultiplexsignal der Nahseite und dem orthogonalen Frequenzmultiplexsignal der Gegenseite.

4. Verfahren nach Anspruch 1, wobei das Gewinnen einer Trägerphasendifferenz zwischen dem orthogonalen Echo-Frequenzmultiplexsignal der Nahseite und dem orthogonalen Frequenzmultiplexsignal der Gegenseite umfasst:

   Erfassen des orthogonalen Echo-Frequenzmultiplexsignals der Nahseite und des orthogonalen Frequenzmultiplexsignals der Gegenseite, die empfangen werden, und Gewinnen der Transferfunktion des Nahseiten-Echokanals und der Trägerphasendifferenz zwischen dem orthogonalen Echo-Frequenzmultiplexsignal der Nahseite und dem orthogonalen Frequenzmultiplexsignal der Gegenseite.

5. Verfahren nach Anspruch 1, wobei das Gewinnen einer Trägerphasendifferenz zwischen dem orthogonalen Echo-Frequenzmultiplexsignal der Nahseite und dem orthogonalen Frequenzmultiplexsignal der Gegenseite umfasst:

   Erfassen des orthogonalen Echo-Frequenzmultiplexsignals der Nahseite, das durch einen Differentialübertrager gegangen ist, und Gewinnen der Transferfunktion des Nahseiten-Echokanals und einer Phase des orthogonalen Echo-Frequenzmultiplexsignals der Nahseite und Erfassen des orthogonalen Frequenzmultiplexsignals der Gegenseite und gesondert davon Gewinnen einer Phase des orthogonalen Frequenzmultiplexsignals der Gegenseite.

6. Verfahren nach Anspruch 4, wobei das Verfahren vor dem Erzeugen eines Echounterdrückungssignals gemäß der Trägerphasendifferenz zwischen dem orthogonalen Echo-Frequenzmultiplexsignal der Nahseite und dem orthogonalen Frequenzmultiplexsignal der Gegenseite, der Kanaltransferfunktion des Nahseiten-Echokanals und des zu sendenden Nahseitensignals ferner umfasst: Kalkulieren der Trägerphasendifferenz gemäß der gewonnenen Phase des orthogonalen Echo-Frequenzmultiplexsignals der Nahseite und der gewonnenen Phase des orthogonalen Frequenzmultiplexsignals der Gegenseite.

7. Verfahren nach Anspruch 1, wobei das Verfahren nach dem Gewinnen der Trägerphasendifferenz zwischen dem orthogonalen Echo-Frequenzmultiplexsignal der Nahseite und dem orthogonalen Frequenzmultiplexsignal der Gegenseite und einer Kanaltransferfunktion eines Nahseiten-Echokanals ferner umfasst:

   Durchführen einer adaptiven Filterverarbeitung für das zu sendende Nahseitensignal gemäß der Trägerphasendifferenz zwischen dem orthogonalen Echo-Frequenzmultiplexsignal der Nahseite und dem orthogonalen Frequenzmultiplexsignal der Gegenseite und gemäß der Kanaltransferfunktion des Nahseiten-Echokanals, um das Echounterdrückungssignal zu erzeugen.

8. Verfahren nach Anspruch 3, wobei das Verfahren nach dem Gewinnen eines Produkts aus der Kanaltransferfunktion des Nahseiten-Echokanals und einem Sinuswert der Trägerphasendifferenz zwischen dem orthogonalen Echo-Frequenzmultiplexsignal der Nahseite und dem orthogonalen Frequenzmultiplexsignal der Gegenseite und eines Produkts aus der Kanaltransferfunktion des Nahseiten-Echokanals und einem Kosinuswert der Trägerphasendifferenz zwischen dem orthogonalen Echo-Frequenzmultiplexsignal der Nahseite und dem orthogonalen Frequenzmultiplexsignal der Gegenseite ferner umfasst:

   Durchführen einer adaptiven Filterverarbeitung für das zu sendende Nahseitensignal gemäß dem Produkt aus der Kanaltransferfunktion des Nahseiten-Echokanals und dem Sinuswert der Trägerphasendifferenz zwischen dem orthogonalen Echo-Frequenzmultiplexsignal der Nahseite und dem orthogonalen Frequenzmultiplexsignal der Gegenseite und dem Produkt aus der Kanaltransferfunktion des Nahseiten-Echokanals und dem Kosinuswert der Trägerphasendifferenz zwischen dem orthogonalen Echo-Frequenzmultiplexsignal der Nahseite und dem orthogonalen Frequenzmultiplexsignal der Gegenseite, um das Echounterdrückungssignal zu erzeugen.

9. Übertragungsvorrichtung, die Trägermodulation benutzt, umfassend:

   eine Sendeeinheit (201), die so ausgelegt ist, dass sie ein orthogonales Frequenzmultiplexsignal der Nahseite auf mindestens einem orthogonalen Frequenzmultiplex-Unterträgerkanal sendet;
   eine Empfangseinheit (202), die so ausgelegt ist, dass sie ein orthogonales Frequenzmultiplexsignal der Gegenseite auf mindestens einem orthogonalen Frequenzmultiplex-Unterträgerkanal empfängt;
   eine Gewinnungseinheit (203), die so ausgelegt ist, dass sie Systemparameter eines empfangenen Signals gemäß einem orthogonalen Echo-Frequenzmultiplexsignal, das aus dem gesendeten orthogonalen Frequenzmultiplexsignal der Nahseite erzeugt wird, und gemäß dem empfangenen orthogonalen Frequenzmultiplexsignal der Gegenseite gewinnt, wobei das empfangene Signal ein überlapptes Signal des orthogonalen Echo-Frequenzmultiplexsignals der Nahseite und des orthogonalen Frequenzmultiplexsignals der Gegenseite ist;
   eine Echounterdrückungssignal-Erzeugungseinheit (204), die so ausgelegt ist, dass sie ein Echounterdrückungssignal gemäß den Systemparametern des empfangenen Signals und gemäß einem zu sendenden Nahseitensignal generiert, wobei das zu sendende Nahseitensignal ein Signal ist, das existiert, bevor das orthogonale Frequenzmultiplexsignal der Nahseite der orthogonalen Frequenzmultiplexmodulation unterzogen wird; und
   eine Unterdrückungseinheit (205), die so ausgelegt ist, dass sie das Echounterdrückungssignal und das empfangene Signal überlappt, um das orthogonale Echo-Frequenzmultiplexsignal der Nahseite zu unterdrücken, das im empfangenen Signal überlappt wird;

   wobei die Gewinnungseinheit (203) speziell ausgelegt ist, um:

   eine Trägerphasendifferenz zwischen dem orthogonalen Echo-Frequenzmultiplexsignal der Nahseite und dem orthogonalen Frequenzmultiplexsignal der Gegenseite und eine Kanaltransferfunktion eines Nahseiten-Echokanals gemäß dem orthogonalen Echo-Frequenzmultiplexsignal der Nahseite, das aus dem gesendeten orthogonalen Frequenzmultiplexsignal der Nahseite erzeugt wird, und gemäß dem empfangenen orthogonalen Frequenzmultiplexsignal der Gegenseite zu gewinnen.

10. Übertragungsvorrichtung nach Anspruch 9, wobei die Empfangseinheit (202) ferner so ausgelegt ist, dass sie eine orthogonale Frequenzmultiplexdemodulation für das orthogonale Frequenzmultiplexsignal der Gegenseite durchführt.

11. Übertragungsvorrichtung nach Anspruch 9, wobei die Gewinnungseinheit (203) ferner ausgelegt ist, um:

ein Produkt aus einer Kanaltransferfunktion eines Nahseiten-Echokanals und einem Sinuswert der Trägerphasendifferenz zwischen dem orthogonalen Echo-Frequenzmultiplexsignal der Nahseite und dem orthogonalen Frequenzmultiplexsignal der Gegenseite und ein Produkt aus der Kanaltransferfunktion des Nahseiten-Echokanals und einem Kosinuswert der Trägerphasendifferenz zwischen dem orthogonalen Echo-Frequenzmultiplexsignal der Nahseite und dem orthogonalen Frequenzmultiplexsignal der Gegenseite zu gewinnen.

12. Übertragungsvorrichtung nach Anspruch 9, wobei die Gewinnungseinheit (203) ferner umfasst:

eine erste Gewinnungsuntereinheit, die so ausgelegt ist, dass sie das orthogonale Echo-Frequenzmultiplexsignal der Nahseite erfasst, das durch einen Differentialübertrager gegangen ist, und die Transferfunktion des Nahseiten-Echokanals und eine Phase des orthogonalen Echo-Frequenzmultiplexsignals gewinnt; und
eine zweite Gewinnungsuntereinheit, die so ausgelegt ist, dass sie das orthogonale Frequenzmultiplexsignal der Gegenseite erfasst und eine Phase des orthogonalen Frequenzmultiplexsignals der Gegenseite gewinnt.

13. Übertragungsvorrichtung nach Anspruch 12, wobei die das Echounterdrückungssignal erzeugende Einheit (204) ferner so ausgelegt ist, dass sie die Trägerphasendifferenz gemäß der gewonnenen Phase des orthogonalen Echo-Frequenzmultiplexsignals der Nahseite und der gewonnenen Phase des orthogonalen Frequenzmultiplexsignals der Gegenseite berechnet.

14. Übertragungsvorrichtung nach Anspruch 9, wobei die das Echounterdrückungssignal erzeugende Einheit (204) speziell so ausgelegt ist, dass sie die adaptive Filterverarbeitung für das zu sendende Nahseitensignal gemäß der Trägerphasendifferenz zwischen dem orthogonalen Echo-Frequenzmultiplexsignal der Nahseite und dem orthogonalen Frequenzmultiplexsignal der Gegenseite und gemäß der Kanaltransferfunktion des Nahseiten-Echokanals ausführt, um das Echounterdrückungssignal zu erzeugen.

15. Übertragungsvorrichtung nach Anspruch 11, wobei die das Echounterdrückungssignal erzeugende Einheit (204) ferner so ausgelegt ist, dass sie die adaptive Filterverarbeitung für das zu sendende Nahseitensignal gemäß dem Produkt aus der Kanaltransferfunktion des Nahseiten-Echokanals und dem Sinuswert der Trägerphasendifferenz zwischen dem orthogonalen Echo-Frequenzmultiplexsignal der Nahseite und dem orthogonalen Frequenzmultiplexsignal der Gegenseite und dem Produkt aus der Kanaltransferfunktion des Nahseiten-Echokanals und dem Kosinuswert der Trägerphasendifferenz zwischen dem orthogonalen Echo-Frequenzmultiplexsignal der Nahseite und dem orthogonalen Frequenzmultiplexsignal der Gegenseite durchführt, um das Echounterdrückungssignal zu erzeugen.

16. Übertragungssystem, das Trägermodulation benutzt, eine Nahseitenvorrichtung und eine Gegenseitenvoruchtung umfassend, wobei die Nahseitenvorrichtung die Übertragungsvorrichtung aus Anspruch 9 ist; und
die Gegenseitenvoruchtung eine Sendeeinheit umfasst, die ausgelegt ist, um ein orthogonales Frequenzmultiplexsignal der Gegenseite zu senden; und
die Gegenseitenvoruchtung die Sendeeinheit benutzt, um das orthogonale Frequenzmultiplexsignal der Gegenseite an die Nahseitenvorrichtung zu senden; die Nahseitenvorrichtung die Empfangseinheit benutzt, um das orthogonale Frequenzmultiplexsignal der Gegenseite zu empfangen, und zugleich die Nahseitenvorrichtung ihre Sendeeinheit benutzt, um ein orthogonales Frequenzmultiplexsignal der Nahseite zu senden; nachdem das orthogonale Frequenzmultiplexsignal der Nahseite durch einen Differentialübertrager geht, wird ein orthogonales Echo-Frequenzmultiplexsignal der Nahseite erzeugt; benutzt die Nahseitenvorrichtung die Gewinnungseinheit, um die Systemparameter des orthogonalen Echo-Frequenzmultiplexsignals der Nahseite und des orthogonalen Frequenzmultiplexsignals der Gegenseite, eine Kanaltransferfunktion eines Nahseiten-Echokanals und ein zu sendendes Nahseitensignal zu gewinnen, und erzeugt ein Echounterdrückungssignal; überlappt die Unterdrückungseinheit das Echounterdrückungssignal und ein empfangenes Signal, um das orthogonale Echo-Frequenzmultiplexsignal der Nahseite

**EP 2 787 654 B1**

zu unterdrücken, das im empfangenen Signal überlappt wird.

**Revendications**

1. Procédé de transmission qui utilise une modulation de porteuse, comprenant :

exécuter (S101), par une extrémité proche, l'envoi d'un signal de multiplexage par répartition orthogonale de la fréquence d'extrémité proche et la réception d'un signal de multiplexage par répartition orthogonale de la fréquence d'extrémité distante simultanément sur un canal de sous-porteuse de multiplexage par répartition orthogonale de la fréquence ;

obtenir (S102) des paramètres système d'un signal reçu selon un signal de multiplexage par répartition orthogonale de la fréquence d'écho d'extrémité proche généré à partir du signal de multiplexage par répartition orthogonale de la fréquence d'extrémité proche envoyé et selon le signal de multiplexage par répartition orthogonale de la fréquence d'extrémité distante reçu, le signal reçu étant un signal superposé du signal de multiplexage par répartition orthogonale de la fréquence d'écho d'extrémité proche et du signal de multiplexage par répartition orthogonale de la fréquence d'extrémité distante ;

générer (S103) un signal d'annulation d'écho selon les paramètres système du signal reçu et selon un signal d'extrémité proche à envoyer, le signal d'extrémité proche à envoyer étant un signal existant avant que le signal de multiplexage par répartition orthogonale de la fréquence d'extrémité proche ne soit soumis à une modulation de multiplexage par répartition orthogonale de la fréquence ; et

superposer (S104) le signal d'annulation d'écho et le signal reçu pour annuler le signal de multiplexage par répartition orthogonale de la fréquence d'écho d'extrémité proche qui est superposé dans le signal reçu ;

l'étape consistant à obtenir (S102) des paramètres système d'un signal reçu comprenant : obtenir une différence de phase de porteuse entre le signal de multiplexage par répartition orthogonale de la fréquence d'écho d'extrémité proche et le signal de multiplexage par répartition orthogonale de la fréquence d'extrémité distante, et une fonction de transfert de canal d'un canal d'écho d'extrémité proche.

2. Procédé selon la revendication 1, dans lequel l'étape consistant à exécuter (S100) la réception d'un signal de multiplexage par répartition orthogonale de la fréquence d'extrémité distante comprend en outre : exécuter (S101) une démodulation de multiplexage par répartition orthogonale de la fréquence pour le signal de multiplexage par répartition orthogonale de la fréquence d'extrémité distante.

3. Procédé selon la revendication 1, dans lequel l'étape consistant à obtenir (S102) des paramètres système d'un signal reçu comprend en outre :

obtenir un produit d'une fonction de transfert de canal d'un canal d'écho d'extrémité proche et d'une valeur de sinus de la différence de phase de porteuse entre le signal de multiplexage par répartition orthogonale de la fréquence d'écho d'extrémité proche et le signal de multiplexage par répartition orthogonale de la fréquence d'extrémité distante, et un produit de la fonction de transfert de canal du canal d'écho d'extrémité proche et d'une valeur de cosinus de la différence de phase de porteuse entre le signal de multiplexage par répartition orthogonale de la fréquence d'écho d'extrémité proche et le signal de multiplexage par répartition orthogonale de la fréquence d'extrémité distante.

4. Procédé selon la revendication 1, dans lequel l'étape consistant à obtenir une différence de phase de porteuse entre le signal de multiplexage par répartition orthogonale de la fréquence d'écho d'extrémité proche et le signal de multiplexage par répartition orthogonale de la fréquence d'extrémité distante comprend :

détecter le signal de multiplexage par répartition orthogonale de la fréquence d'écho d'extrémité proche et le signal de multiplexage par répartition orthogonale de la fréquence d'extrémité distante qui sont reçus, et obtenir la fonction de transfert du canal d'écho d'extrémité proche et la différence de phase de porteuse entre le signal de multiplexage par répartition orthogonale de la fréquence d'écho d'extrémité proche et le signal de multiplexage par répartition orthogonale de la fréquence d'extrémité distante.

5. Procédé selon la revendication 1, dans lequel l'étape consistant à obtenir une différence de phase de porteuse entre le signal de multiplexage par répartition orthogonale de la fréquence d'écho d'extrémité proche et le signal de multiplexage par répartition orthogonale de la fréquence d'extrémité distante comprend :

détecter le signal de multiplexage par répartition orthogonale de la fréquence d'écho d'extrémité proche qui est passé à travers un transformateur différentiel et obtenir la fonction de transfert du canal d'écho d'extrémité proche et une phase du signal de multiplexage par répartition orthogonale de la fréquence d'écho d'extrémité proche, et détecter le signal de multiplexage par répartition orthogonale de la fréquence d'extrémité distante et obtenir une phase du signal de multiplexage par répartition orthogonale de la fréquence d'extrémité distante, séparément.

6. Procédé selon la revendication 4 dans lequel, avant l'étape consistant à générer un signal d'annulation d'écho selon la différence de phase de porteuse entre le signal de multiplexage par répartition orthogonale de la fréquence d'écho d'extrémité proche et le signal de multiplexage par répartition orthogonale de la fréquence d'extrémité distante, la fonction de transfert de canal du canal d'écho d'extrémité proche, et le signal d'extrémité proche à envoyer, le procédé comprend en outre :

calculer la différence de phase de porteuse selon la phase obtenue du signal de multiplexage par répartition orthogonale de la fréquence d'écho d'extrémité proche et la phase obtenue du signal de multiplexage par répartition orthogonale de la fréquence d'extrémité distante.

7. Procédé selon la revendication 1 dans lequel, après l'étape consistant à obtenir une différence de phase de porteuse entre le signal de multiplexage par répartition orthogonale de la fréquence d'écho d'extrémité proche et le signal de multiplexage par répartition orthogonale de la fréquence d'extrémité distante, et une fonction de transfert de canal d'un canal d'écho d'extrémité proche, le procédé comprend en outre :

exécuter un traitement de filtrage adaptatif pour le signal d'extrémité proche à envoyer selon la différence de phase de porteuse entre le signal de multiplexage par répartition orthogonale de la fréquence d'écho d'extrémité proche et le signal de multiplexage par répartition orthogonale de la fréquence d'extrémité distante et selon la fonction de transfert de canal du canal d'écho d'extrémité proche, pour générer le signal d'annulation d'écho.

8. Procédé selon la revendication 3 dans lequel, après l'étape consistant à obtenir un produit de la fonction de transfert de canal du canal d'écho d'extrémité proche et d'une valeur de sinus de la différence de phase de porteuse entre le signal de multiplexage par répartition orthogonale de la fréquence d'écho d'extrémité proche et le signal de multiplexage par répartition orthogonale de la fréquence d'extrémité distante, et un produit de la fonction de transfert de canal du canal d'écho d'extrémité proche et d'une valeur de cosinus de la différence de phase de porteuse entre le signal de multiplexage par répartition orthogonale de la fréquence d'écho d'extrémité proche et le signal de multiplexage par répartition orthogonale de la fréquence d'extrémité distante, le procédé comprend en outre :

exécuter un traitement de filtrage adaptatif pour le signal d'extrémité proche à envoyer selon le produit de la fonction de transfert de canal du canal d'écho d'extrémité proche et de la valeur de sinus de la différence de phase de porteuse entre le signal de multiplexage par répartition orthogonale de la fréquence d'écho d'extrémité proche et le signal de multiplexage par répartition orthogonale de la fréquence d'extrémité distante, et le produit de la fonction de transfert de canal du canal d'écho d'extrémité proche et de la valeur de cosinus de la différence de phase de porteuse entre le signal de multiplexage par répartition orthogonale de la fréquence d'écho d'extrémité proche et le signal de multiplexage par répartition orthogonale de la fréquence d'extrémité distante, pour générer le signal d'annulation d'écho.

9. Appareil de transmission qui utilise une modulation de porteuse, comprenant :

une unité d'envoi (201), configurée pour envoyer un signal de multiplexage par répartition orthogonale de la fréquence d'extrémité proche sur au moins un canal de sous-porteuse de multiplexage par répartition orthogonale de la fréquence ;
une unité de réception (202), configurée pour recevoir un signal de multiplexage par répartition orthogonale de la fréquence d'extrémité distante sur au moins un canal de sous-porteuse de multiplexage par répartition orthogonale de la fréquence ;
une unité d'obtention (203), configurée pour obtenir des paramètres système d'un signal reçu selon un signal de multiplexage par répartition orthogonale de la fréquence d'écho d'extrémité proche généré à partir du signal de multiplexage par répartition orthogonale de la fréquence d'écho d'extrémité proche envoyé et selon le signal de multiplexage par répartition orthogonale de la fréquence d'extrémité distante reçu, le signal reçu étant un signal superposé du signal de multiplexage par répartition orthogonale de la fréquence d'écho d'extrémité proche et du signal de multiplexage par répartition orthogonale de la fréquence d'extrémité distante ;

une unité de génération de signal d'annulation d'écho (204), configurée pour générer un signal d'annulation d'écho selon les paramètres système du signal reçu et selon un signal d'extrémité proche à envoyer, le signal d'extrémité proche à envoyer étant un signal existant avant que le signal de multiplexage par répartition orthogonale de la fréquence d'extrémité proche ne soit soumis à une modulation de multiplexage par répartition orthogonale de la fréquence ; et

une unité d'annulation (205), configurée pour superposer le signal d'annulation d'écho et le signal reçu afin d'annuler le signal de multiplexage par répartition orthogonale de la fréquence d'écho d'extrémité proche qui est superposé dans le signal reçu ;

l'unité d'obtention (203) étant configurée spécifiquement pour :

obtenir une différence de phase de porteuse entre le signal de multiplexage par répartition orthogonale de la fréquence d'écho d'extrémité proche et le signal de multiplexage par répartition orthogonale de la fréquence d'extrémité distante, et une fonction de transfert de canal d'un canal d'écho d'extrémité proche selon le signal de multiplexage par répartition orthogonale de la fréquence d'écho d'extrémité proche généré à partir du signal de multiplexage par répartition orthogonale de la fréquence d'extrémité proche envoyé et selon le signal de multiplexage par répartition orthogonale de la fréquence d'extrémité distante reçu.

10. Appareil de transmission selon la revendication 9, dans lequel l'unité de réception (202) est en outre configurée pour exécuter une démodulation de multiplexage par répartition orthogonale de la fréquence pour le signal de multiplexage par répartition orthogonale de la fréquence d'extrémité distante.

11. Appareil de transmission selon la revendication 9, dans lequel l'unité d'obtention (203) est en outre configurée pour :

obtenir un produit d'une fonction de transfert de canal d'un canal d'écho d'extrémité proche et d'une valeur de sinus de la différence de phase de porteuse entre le signal de multiplexage par répartition orthogonale de la fréquence d'écho d'extrémité proche et le signal de multiplexage par répartition orthogonale de la fréquence d'extrémité distante, et un produit de la fonction de transfert de canal du canal d'écho d'extrémité proche et d'une valeur de cosinus de la différence de phase de porteuse entre le signal de multiplexage par répartition orthogonale de la fréquence d'écho d'extrémité proche et le signal de multiplexage par répartition orthogonale de la fréquence d'extrémité distante.

12. Appareil de transmission selon la revendication 9, dans lequel l'unité d'obtention (203) comprend en outre :

une première sous-unité d'obtention, configurée pour détecter le signal de multiplexage par répartition orthogonale de la fréquence d'écho d'extrémité proche qui est passé à travers un transformateur différentiel et obtenir la fonction de transfert du canal d'écho d'extrémité proche et une phase du signal de multiplexage par répartition orthogonale de la fréquence d'écho ; et

une deuxième sous-unité d'obtention, configurée pour détecter le signal de multiplexage par répartition orthogonale de la fréquence d'extrémité distante et obtenir une phase du signal de multiplexage par répartition orthogonale de la fréquence d'extrémité distante.

13. Appareil de transmission selon la revendication 12, dans lequel l'unité de génération de signal d'annulation d'écho (204) est en outre configurée pour calculer la différence de phase de porteuse selon la phase obtenue du signal de multiplexage par répartition orthogonale de la fréquence d'écho d'extrémité proche et la phase obtenue du signal de multiplexage par répartition orthogonale de la fréquence d'extrémité distante.

14. Appareil de transmission selon la revendication 9, dans lequel l'unité de génération de signal d'annulation d'écho (204) est configurée spécifiquement pour exécuter un traitement de filtrage adaptatif pour le signal d'extrémité proche à envoyer selon la différence de phase de porteuse entre le signal de multiplexage par répartition orthogonale de la fréquence d'écho d'extrémité proche et le signal de multiplexage par répartition orthogonale de la fréquence d'extrémité distante et selon la fonction de transfert de canal du canal d'écho d'extrémité proche, pour générer le signal d'annulation d'écho.

15. Appareil de transmission selon la revendication 11, dans lequel l'unité de génération de signal d'annulation d'écho (204) est en outre configurée pour exécuter un traitement de filtrage adaptatif pour le signal d'extrémité proche à envoyer selon le produit de la fonction de transfert de canal du canal d'écho d'extrémité proche et de la valeur de sinus de la différence de phase de porteuse entre le signal de multiplexage par répartition orthogonale de la fréquence d'écho d'extrémité proche et le signal de multiplexage par répartition orthogonale de la fréquence d'extrémité distante, et le produit de la fonction de transfert de canal du canal d'écho d'extrémité proche et de la valeur de cosinus de la différence de phase de porteuse entre le signal de multiplexage par répartition orthogonale de la fréquence d'écho d'extrémité proche et le signal de multiplexage par répartition orthogonale de la fréquence d'extrémité distante, pour générer le signal d'annulation d'écho.

16. Système de transmission qui utilise une modulation de porteuse, comprenant un appareil d'extrémité proche et un appareil d'extrémité distante, l'appareil d'extrémité proche étant l'appareil de transmission de la revendication 9 ; et l'appareil d'extrémité distante comportant une unité d'envoi, configurée pour envoyer un signal de multiplexage par répartition orthogonale de la fréquence d'extrémité distante ; et

l'appareil d'extrémité distante utilisant l'unité d'envoi pour envoyer le signal de multiplexage par répartition orthogonale de la fréquence d'extrémité distante au dispositif d'extrémité proche ; le dispositif d'extrémité proche utilisant l'unité de réception pour recevoir le signal de multiplexage par répartition orthogonale de la fréquence d'extrémité distante et en même temps le dispositif d'extrémité proche utilisant son unité d'envoi pour envoyer un signal de multiplexage par répartition orthogonale de la fréquence d'extrémité proche ; après que le signal de multiplexage par répartition orthogonale de la fréquence d'extrémité proche a traversé un transformateur différentiel, un signal de multiplexage par répartition orthogonale de la fréquence d'écho d'extrémité proche étant généré ; le dispositif d'extrémité proche utilisant l'unité d'obtention pour obtenir des paramètres système du signal de multiplexage par répartition orthogonale de la fréquence d'écho d'extrémité proche et du signal de multiplexage par répartition orthogonale de la fréquence d'extrémité distante, une fonction de transfert de canal d'un canal d'écho d'extrémité proche, et un signal d'extrémité proche à envoyer, et générant un signal d'annulation d'écho ; l'unité d'annulation superposant le signal d'annulation d'écho et un signal reçu pour annuler le signal de multiplexage par répartition orthogonale de la fréquence d'écho d'extrémité proche qui est superposé dans le signal reçu.

A near-end device performs sending of a near-end orthogonal frequency division multiplexing signal and receiving of a far-end orthogonal frequency division multiplexing signal simultaneously on an orthogonal frequency division multiplexing subcarrier channel

S101

Perform orthogonal frequency division multiplexing demodulation for the far-end orthogonal frequency division multiplexing signal

S1011

Obtain system parameters of a received signal according to a near-end echo orthogonal frequency division multiplexing signal generated from the sent near-end orthogonal frequency division multiplexing signal and according to the received far-end orthogonal frequency division multiplexing signal, where the received signal is an overlapped signal of the near-end echo signal and the far-end orthogonal frequency division multiplexing signal

S102

Generate an echo cancellation signal according to the system parameters of the near-end echo orthogonal frequency division multiplexing signal and the far-end orthogonal frequency division multiplexing signal and according to a near-end signal to be sent, where the near-end signal to be sent is a signal existent before the near-end orthogonal frequency division multiplexing signal undergoes orthogonal frequency division multiplexing modulation

S103

Overlap the echo cancellation signal and the received signal to cancel the near-end echo orthogonal frequency division multiplexing signal that is overlapped in the received signal, where the received signal is the overlapped signal of the near-end echo signal and the far-end orthogonal frequency division multiplexing signal

S104

FIG. 1

200

201

Sending
unit

Echo
channel

204

Echo cancellation
signal generating
unit

203

Obtaining
unit

205

Cancelling
unit

Receiving
unit

202

Far end

FIG. 2

FIG. 3

204

Echo cancellation signal
generating unit

First echo cancellation
signal generating unit
2041

Second echo cancellation
signal generating unit
2042

FIG. 4

5

Orthogonal frequency division
multiplexing duplex
transmission system

51

51

Sending unit
511

Receiving unit
512

Obtaining unit
513

514

Echo cancellation
signal generating unit

Cancelling unit
515

52

Sending
unit
521

FIG. 5

23

**EP 2 787 654 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010037957 A1

- WO 9953664 A1